# EUROPEAN PATENT SPECIFICATION

(11) **EP 2 336 687 B1**
(45) Date of publication and mention of the grant of the patent: **26.07.2017**
(21) Application number: 10194871.9
(22) Date of filing: 14.12.2010
(51) Int. Cl.: F25D 17/06, F25D 23/06, F25D 23/08

(54) **Refrigerating appliance of the no-frost type, in particular for household use, and method for making such an appliance**
No-Frost-Kältegerät, insbesondere Haushalts-No-Frost-Kältegerät, und Verfahren zur Herstellung eines solchen Geräts
Appareil frigorifique sans givre, de préférence à usage domestique, et procédé de fabrication d'un tel appareil

(30) Priority: 21.12.2009 IT TO20091007
(43) Date of publication of application: 22.06.2011
(73) Proprietor: Whirlpool EMEA S.p.A, 20016 Pero (MI) (IT)
(72) Inventor: Sabatini, Giorgio, 63030 Colli di Tronto (AP) (IT)
(74) Representative: Dini, Roberto

(56) References cited:
- WO-A1-2006/120099
- WO-A2-2007/019659
- US-A- 6 044 654

## Description

The present invention relates to a refrigerating appliance of the no-frost type, in particular for household use, according to the preamble of claim 1. Such a refrigerating appliance is known, for example, from WO-A1-2006/120099. The present invention also relates to a method for making said refrigerating appliance.

In no-frost refrigerating appliances, heat is removed from foodstuffs by forced convection, thus generating a circulation of cooling air inside the appliance; this feature distinguishes no-frost refrigerating appliances from static ones, i.e. without forced convection.

Another essential difference between no-frost and static refrigerating appliances is the different mode of defrosting, which is controlled electronically in no-frost refrigerating appliances (hence the designation "no-frost"), whereas it must be carried out manually in static refrigerating appliances.

Known no-frost refrigerating appliances have at least one inner compartment for preserving foodstuffs. They typically comprise two inner compartments kept at different temperatures, thus providing at least two different foodstuff preservation states, in particular a refrigerator compartment suitable for preserving fresh foods at a temperature between 0°C and 10°C and a freezer compartment suitable for preserving frozen foods at a temperature between -15°C and -30°C; such refrigerating appliances are commonly referred to by those skilled in the art of household refrigeration as "double-door" or "combined" refrigerators, depending on the relative position of the two compartments. In a "double-door" refrigerating appliance, the freezer compartment is above the refrigerator compartment, whereas in a "combined" refrigerating appliance the freezer compartment is located at the bottom.

Furthermore, no-frost refrigerating appliances are equipped with a refrigerating chamber comprising:
- an evaporator adapted to cool the air;
- a fan for circulating the air inside the refrigerating appliance.

One example of a no-frost refrigerating appliance is described in the International patent application published under No. WO2006120058.

In this patent application, the fan delivers the cooling air into a duct adapted to distribute the cooling air into the refrigerator, said duct being formed by a U-shaped section made of plastic material associated with a sheet made of insulating material.

In particular, the U-shaped section and the sheet are positioned in the space existing between an outer housing of the refrigerating appliance and an inner compartment (refrigerator compartment and/or freezer compartment) for preserving foodstuffs; such positioning is done by securing the U-shaped portion to the rear part of said inner compartment with the sheet of insulating material in between, in order to insulate the inner compartment from the cooling air flowing inside the U-shaped portion.

Once the U-shaped section and the insulating sheet have been secured to the inner compartment, which step is usually carried out by using adhesive material, the space between the outer housing of the refrigerating appliance and the U-shaped section is filled with insulating foam made of plastic material, e.g. polyurethane.

However, no-frost refrigerating appliances in accordance with said patent application have shown a few drawbacks, mainly due to the particular design of the duct used for distributing the cooling air into the refrigerating appliance.

In fact, securing the U-shaped section and the sheet to the inner compartment of the refrigerating appliance necessarily involves increased costs for manufacturing the refrigerating appliance.

A further drawback of the above-described solution is that, when assembling the refrigerating appliance, the elements forming the cooling air distribution duct may be displaced from the desired position, e.g. when filling with insulating foam the space between the outer housing of the refrigerating appliance and the U-shaped section; it is clear that a displaced duct will inevitably impair the functionality of the whole refrigerating appliance.

Another drawback of said solution is that during the foaming step there may be leaks of insulating foam into the cooling air distribution duct, in particular if the duct has not been properly secured.

In this frame, it is the main object of the present invention to provide a refrigerating appliance of the no-frost type, in particular for household use, adapted to overcome the above-described drawbacks and to prove especially efficient and economical.

It is another object of the present invention to provide a refrigerating appliance of the no-frost type, in particular for household use, so designed as to ensure an optimal exploitation of the inner spaces of the appliance itself, for the purpose of most effectively using the available volumes for food preservation.

It is a further object of the present invention to provide a refrigerating appliance of the no-frost type, in particular for household use, wherein the cooling air distribution duct can ensure adequate functionality of the whole appliance.

It is yet another object of the present invention to provide a refrigerating appliance of the no-frost type, in particular for household use, wherein there may be no leaks of foam into the duct during the step of foaming the space between the outer housing of the refrigerating appliance and the duct itself.

These objects are achieved by the present invention through a refrigerating appliance of the no-frost type, in particular for household use, incorporating the features set out in the appended claims. Further objects and advantages of the present invention will become apparent from the following detailed description and from the annexed drawings, which are supplied by way of non-limiting example, wherein:
- Fig. 1 is a sectional side view of a refrigerating appliance according to the present invention;
- Fig. 2a is a sectional top view of a detail of the refrigerating appliance according to the present invention;
- Fig. 2b is a partial and schematic view of the rear part of the refrigerating appliance according to the present invention.

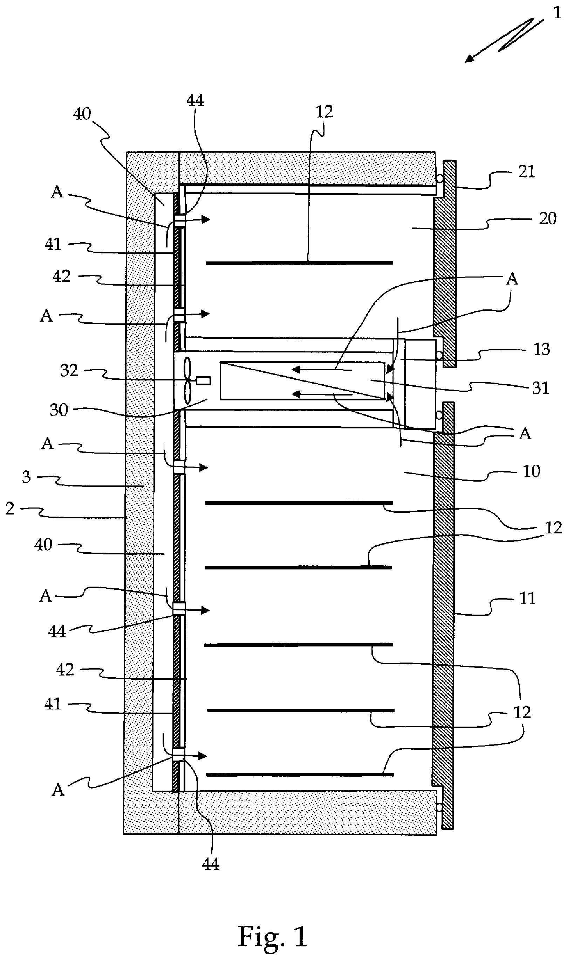

Referring now to Fig. 1, reference numeral 1 designates a refrigerating appliance, in particular for household use, according to the present invention.

The refrigerating appliance 1 is a no-frost unit, i.e. of the type in which heat is removed by forced convection by means of cooling air circulating therein.

Said refrigerating appliance 1 comprises at least one inner compartment 10, 20 for preserving foodstuffs.

In particular, the refrigerating appliance 1 comprises a freezer compartment 20 suitable for preserving frozen foods (usually at a temperature between -15°C and -30°C); in addition, said refrigerating appliance may also comprise a refrigerator compartment 10 suitable for preserving fresh foods (usually at a temperature between 0°C and 10°C).

In the drawing of Fig. 1, the freezer compartment 20 is arranged on top of the refrigerator compartment 10; it is however clear that the arrangement of the compartments 10, 20 may also be different, i.e. the freezer compartment 20 may alternatively be located under the refrigerator compartment 10.

Said at least one inner compartment 10, 20 is defined by a thermoformed cell 41 and is closed by a respective door 11, 21; in particular, a first door 11 is used for closing the refrigerator compartment 10, and a second door 21 is used for closing the freezer compartment 20.

The representation of the refrigerating appliance 1 provided in Fig. 1 only shows some of the items commonly arranged inside a refrigerating appliance 1, such as a plurality of shelves 12 positioned at different heights; for simplicity, some other common components of a refrigerating appliance 1 are not shown in Fig. 1.

The refrigerating appliance 1 is provided with a refrigerating chamber 30 comprising:
- an evaporator 31 adapted to cool the air;
- a fan 32, in particular a centrifugal one, for circulating the cooling air inside the refrigerating appliance 1.

Preferably, said refrigerating chamber 30 is obtained in a space between the refrigerator compartment 10 and the freezer compartment 20, and said evaporator 31 is arranged horizontally inside said refrigerating chamber 30.

As known, the refrigerating power is generated by a compressor (not shown in Fig. 1) belonging to a refrigerating circuit which also includes the evaporator 31. Fig. 1 does not show the other components of the refrigerating circuit, in that such components are well known to those skilled in the art of household refrigeration; also, the drawing does not show a defrosting device which may be associated with the evaporator 31.

The refrigerating appliance 1 comprises a duct 40 for distributing the cooling air coming from the fan 32.

Consequently, the cooling air generated by the evaporator 31 is moved by the fan 32 and released inside the duct 40, from which it flows partly into the freezer compartment 20 and partly into the refrigerator compartment 10; in Fig. 1 the path followed by the cooling air inside the refrigerating appliance 1 is shown by a plurality of arrows A.

As far as the refrigerator compartment 10 is concerned, the air can be conveyed through suitable distribution means, such as, for example, a gate valve (not shown in Fig. 1); said gate valve, which is traditionally installed in double-door or combined refrigerating appliances and is known to those skilled in the art of household refrigeration as "damper", adjusts the flow rate of the cooling air supplied to the refrigerator compartment 10 depending on the temperature therein.

After having subtracted heat by forced convection from the foodstuffs contained in the refrigerator compartment 10 and in the freezer compartment 20, and having thus warmed up, the cooling air then returns to the refrigerating chamber 30 and to the evaporator 31, in particular through an intake duct 13.

According to the present invention, said duct 40 is obtained when thermoforming said thermoformed cell 41, in particular by shaping said thermoformed cell 41 in a manner such that it includes a projection extending towards a back wall 2 of the refrigerating appliance 1.

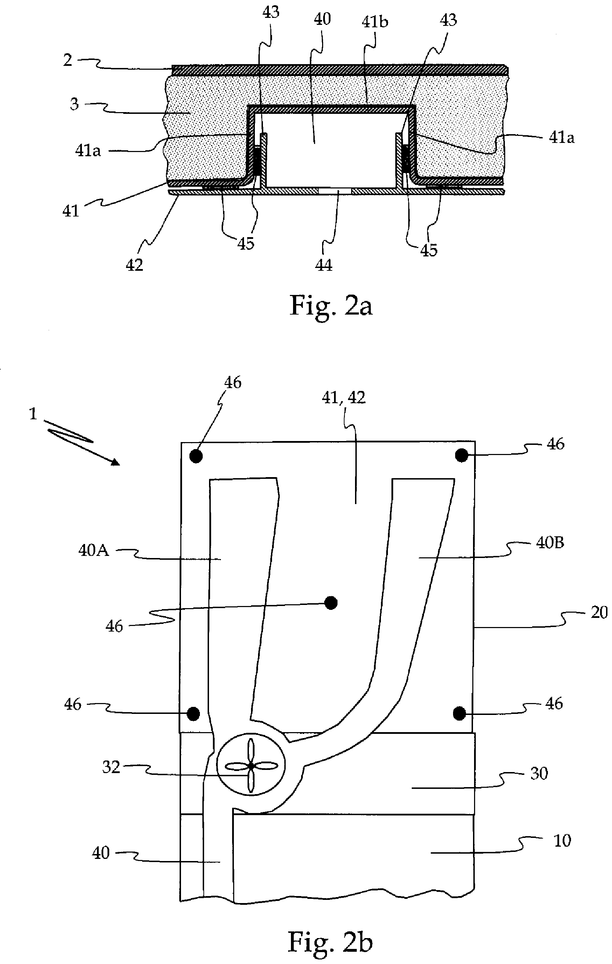

Said projection preferably has three contiguous portions, a pair of first portions 41a being substantially perpendicular to said back wall 2 and a second portion 41b being substantially parallel to said back wall 2, so that said duct 40 has a substantially rectangular cross-section, as shown in Fig. 2a.

The particular design of the cooling air distribution duct 40 according to the present invention allows to cut down the production costs of the refrigerating appliance 1, since it is not necessary to use any specific component in order to delimit said duct 40.

Furthermore, said design ensures that the refrigerating appliance 1 is highly efficient, in that the duct 40 only takes up little space and does not cause a loss of volumes which can be used for preserving foodstuffs.

The design of the duct 40 prevents it from undergoing undesired displacements when the refrigerating appliance 1 is assembled.

As can also be seen in Fig. 2a, the refrigerating appliance 1 preferably comprises an insulating foam 3 made of plastic material, in particular polyurethane, adapted to occupy the inner space between the back wall 2 and said thermoformed cell 41.

The particular design of the duct 40 according to the present invention prevents the foam 3 from leaking into the duct 40 during the foaming step, since said foam 3 is inserted between the back wall 2 and said thermoformed cell 41.

In addition, the refrigerating appliance 1 comprises at least one sheet 42 (also visible in Fig. 1) which can be associated with the thermoformed cell 41 for closing the duct 40. Said sheet 42 comprises a pair of a substantially parallel appendices 43 extending within the duct 40 in the same direction as that of the cooling air flow and acting as a reference element for properly positioning the sheet 42 relative to the thermoformed cell 41.

Said sheet 42 further comprises a plurality of apertures 44 (also visible in Fig. 1) which allow the cooling air to flow into the refrigerator compartment 10 and/or into the freezer compartment 20.

The refrigerating appliance 1 further comprises sealing elements 45, in particular made of spongy material, arranged between the thermoformed cell 41 and the sheet 42 to prevent any leakage of cooling air.

Said sealing elements 45 are positioned in the duct 40 and arranged between the thermoformed cell 41 and the appendices 43 of the sheet 42. Preferably, the refrigerating appliance further comprises sealing elements 45 positioned outside the duct 40 and arranged between the thermoformed cell 41 and the sheet 42.

As can be seen in Fig. 2b, which shows a rear view of the refrigerating appliance 1, in particular of the freezer compartment 20, said sheet 42 substantially has the same dimensions as the inner compartment 10, 20 in which it is inserted, and can be associated with the thermoformed cell 41 through fastening means 46.

Preferably, said fastening means comprise a plurality of screws 46, in particular a first screw 46 being positioned substantially at the centre of the sheet 42 and further screws 46 being positioned substantially near the corners of the sheet 42.

Fig. 3 also shows that said thermoformed cell 41 comprises at least a first 40A and a second 40B ducts for ensuring adequate cooling of the internal compartment 10, 20, in particular of the freezer compartment 20.

A method for making a refrigerating appliance 1 of the no-frost type, in particular for household use, will now be described, which comprises:
- at least one internal compartment 10, 20 for preserving foodstuffs, defined by a thermoformed cell 41, in particular said internal compartment 10, 20 comprising a freezer compartment 20;
- a refrigerating chamber 30 comprising an evaporator 31 adapted to cool the air and a fan 32 for circulating the air inside said at least one internal compartment 10, 20;
- a duct 40 for distributing the cooling air coming from the fan 32 into said refrigerating appliance 1.

According to the present invention, said method is defined in claim 8 and comprises a step of thermoforming said thermoformed cell 41 in a manner such that the latter includes a projection extending towards a back wall 2 of the refrigerating appliance 1 for the purpose of obtaining said duct 40.

According to the present invention, said projection is so designed as to include three contiguous portions 41 a, 41b, a pair of first portions 41 a being substantially perpendicular to said back wall 2 and a second portion 41b being substantially parallel to said back wall 2, so that said duct 40 has a substantially rectangular cross-section (as can be seen in the sectional top view of Fig. 2a).

The method according to the present invention further comprises the following steps:
a) inserting an insulating foam 3 made of plastic material, in particular polyurethane, in the space between said back wall 2 and said thermoformed cell 41;
b) associating a sheet 42 with the thermoformed cell 41 for closing the duct 40 by inserting a pair of appendices 43 into said duct 40, in particular said appendices 43 being obtained when moulding said sheet 42 and being adapted to be used as reference elements for properly positioning the sheet 42 relative to the thermoformed cell 41.

Furthermore, said step b) is preceded by the application of sealing elements 45 to the sheet 42, said sealing elements 45 being positioned in the duct 40 and arranged between the thermoformed cell 41 and said appendices 43 of the sheet 42, said sealing elements 45 being adapted to prevent any leakage of cooling air between the thermoformed cell 41 and the sheet 42.

The features and advantages of the refrigerating appliance and manufacturing method thereof according to the present invention are apparent from the above description.

In particular, the present invention allows the cooling air distribution duct 40 according to the present invention and, as a result, the refrigerating appliance 1 to be manufactured at lower costs.

Another advantage of the present invention is that such a design allows to obtain a highly efficient refrigerating appliance 1, since the duct 40 only takes up little space and does not cause a loss of volume which can be used for preserving foodstuffs.

A further advantage of the present invention is that the particular design of the duct 40 prevents said duct 40 from undergoing undesired displacements when assembling the refrigerating appliance 1, thus complying with the production specifications of the refrigerating appliance 1.

Yet another advantage of the present invention is that said design of the duct 40 prevents the foam from leaking into the duct 40 during the foaming step.

It is however clear that many changes may be made to the refrigerating appliance and to the manufacturing method thereof according to the present invention without departing from the scope of the invention as defined in the following claims.

## Claims

1. A refrigerating appliance (1) of the no-frost type, in particular for household use, comprising:
- at least one internal compartment (10, 20) for preserving foodstuffs, defined by a thermoformed cell (41), in particular said internal compartment (10, 20) comprising a freezer compartment (20);
- a refrigerating chamber (30) comprising an evaporator (31) adapted to cool the air and a fan (32) for circulating the air inside said at least one internal compartment (10, 20);
- a duct (40) for distributing the cooling air coming from the fan (32) into said refrigerating appliance (1),
said duct (40) being obtained when thermoforming said thermoformed cell (41), in particular by shaping said thermoformed cell (41) in a manner such that it includes a projection extending towards a back wall (2) of the refrigerating appliance (1) and said refrigerating appliance (1) comprising at least one sheet (42) which can be associated with the thermoformed cell (41) for closing the duct (40), said sheet (42) comprising a pair of substantially parallel appendices (43) extending within the duct (40) in the same direction as that of the cooling air flow and acting as a reference element for properly positioning the sheet (42) relative to the thermoformed cell (41),
**characterised in that**
it comprises sealing elements (45), in particular made of spongy material, positioned in the duct (40) and arranged between the thermoformed cell (41) and said appendices (43) of the sheet (42) to prevent any leakage of cooling air.

2. A refrigerating appliance (1) according to claim 1, **characterised in that** said refrigerating appliance (1) comprises sealing elements (45) positioned outside the duct (40) and arranged between the thermoformed cell (41) and the sheet (42).

3. A refrigerating appliance (1) according to claim 1, **characterised in that** said projection has three contiguous portions (41a, 41b), a pair of first portions (41a) being substantially perpendicular to said back wall (2) and a second portion (41b) being substantially parallel to said back wall (2), so that said duct (40) has a substantially rectangular cross-section.

4. A refrigerating appliance (1) according to claim 1, **characterised by** comprising an insulating foam (3) made of plastic material, in particular polyurethane, adapted to fill the inner space between the back wall (2) and said thermoformed cell (41).

5. A refrigerating appliance (1) according to claim 1, **characterised in that** said sheet (42) comprises a plurality of apertures (44) allowing the cooling air to flow into the refrigerator compartment (10) and/or into the freezer compartment (20).

6. A refrigerating appliance (1) according to claim 1, **characterised in that** said thermoformed cell (41) comprises at least a first duct (40A) and a second duct (40B) for ensuring adequate cooling of the internal compartment (10, 20), in particular of the freezer compartment (20).

7. A refrigerating appliance (1) according to claim 1, **characterised in that** said evaporator (31) is positioned horizontally inside said refrigerating chamber (30).

8. A method for making a refrigerating appliance (1) of the no-frost type, in particular for household use, comprising:
- at least one internal compartment (10, 20) for preserving foodstuffs, defined by a thermoformed cell (41), in particular said internal compartment (10, 20) comprising a freezer compartment (20);
- a refrigerating chamber (30) comprising an evaporator (31) adapted to cool the air and a fan (32) for circulating the air inside said at least one internal compartment (10, 20);
- a duct (40) for distributing the cooling air coming from the fan (32) into said refrigerating appliance (1),
said method comprising a step of thermo forming said thermo formed cell (41) in a manner such that the latter includes a projection extending towards a back wall (2) of the refrigerating appliance (1) for the purpose of obtaining said duct (40),
said method comprising the following steps:
a) inserting an insulating foam (3) made of plastic material, in particular polyurethane, in the space between said back wall (2) and said thermoformed cell (41);
b) associating a sheet (42) with the thermoformed cell (41) for closing the duct (40), **by** inserting a pair of appendices (43) into said duct (40), in particular said appendices (43) being obtained when moulding said sheet and being adapted to be used as reference elements for properly positioning the sheet (42) relative to the thermoformed cell (41),
**characterised in that**
said step b) is preceded by the application of sealing elements (45) to the sheet (42), said sealing elements (45) being positioned in the duct (40) and arranged between the thermoformed cell (41) and said appendices (43) of the sheet (42), said sealing elements (45) being adapted to prevent any leakage of cooling air between the thermoformed cell (41) and the sheet (42).

9. A method according to claim 8, **characterised in that** said step b) is preceded by the application of sealing elements (45) to the sheet (42) for positioning said sealing elements (45) outside the duct (40) and arrange them between the thermoformed cell (41) and the sheet (42).

10. A method according to claim 8, **characterised in that** said projection has three contiguous portions (41a, 41b), a pair of first portions (41a) being substantially perpendicular to said back wall (2) and a second portion (41b) being substantially parallel to said back wall (2), so that said duct (40) has a substantially rectangular cross-section.

## Patentansprüche

1. Kühlgerät (1) des no-frost-Typs, insbesondere für den Hausgebrauch, umfassend:
- mindestens ein Innenfach (10, 20) zum Konservieren von Lebensmitteln, welches durch eine thermogeformte Zelle (41) definiert ist, wobei das Innenfach (10, 20) insbesondere ein Gefrierfach (20) aufweist;
- eine Kühlkammer (30), welche einen Verdampfer (31), der dazu eingerichtet ist, Luft zu kühlen, und ein Gebläse (32) zum Zirkulieren der Luft im Inneren des zumindest einen Innenfachs (10, 20) aufweist;
- einen Kanal (40) zum Verteilen der von dem Gebläse (32) kommenden Kühlluft in das Kühlgerät (1), wobei der Kanal (40) beim Thermoformen der thermogeformten Zelle (41), insbesondere durch ein Formen der thermogeformten Zelle (41) in einer Weise, dass sie einen Vorsprung beinhaltet, der sich zu einer Rückwand (2) des Kühlgerätes (1) erstreckt, erhalten wird und wobei das Kühlgerät (1) mindestens eine Platte (42) aufweist, welche mit der thermogeformten Zelle (41) zum Schließen des Kanals (40) assoziiert werden kann, wobei die Platte (42) ein Paar von im Wesentlichen parallelen Fortsätzen (43) aufweist, die sich innerhalb des Kanals (40) in der gleichen Richtung wie jene des Kühlmittelstroms erstrecken und als Referenzelement zum korrekten Positionieren der Platte (42) relativ zu der thermogeformten Zelle (41) dienen,
**dadurch gekennzeichnet, dass**
es Dichtungselemente (45) aufweist, insbesondere aus spongiösem Material, die in dem Kanal (40) positioniert sind und zwischen der thermogeformten Zelle (41) und den Fortsätzen (43) der platte (42) angeordnet sind, um jedwedes Austreten von Kühlluft zu verhindern.

2. Kühlgerät (1) gemäß Anspruch 1, **dadurch gekennzeichnet, dass** das Kühlgerät (1) Dichtungselemente (45) aufweist, die außerhalb des Kanals (40) positioniert sind und zwischen der thermogeformten Zelle (41) und der Platte (42) angeordnet sind.

3. Kühlgerät (1) gemäß Anspruch 1, **dadurch gekennzeichnet, dass** der Vorsprung drei zusammenhängende Abschnitte (41a, 41b) aufweist, wobei ein Paar erster Abschnitte (41a) im Wesentlichen senkrecht zur Rückwand (2) ist und ein zweiter Abschnitt (41 b) im Wesentlichen parallel zur der Rückwand (2) ist, so dass der Kanal (40) einen im Wesentlichen rechteckigen Querschnitt aufweist.

4. Kühlgerät (1) gemäß Anspruch 1, **dadurch gekennzeichnet, dass** es einen Isolierschaum (3) aus einem Kunststoffmaterial, insbesondere Polyurethan, aufweist, welcher dazu eingerichtet ist, den inneren Raum zwischen der Rückwand (2) und der thermogeformten Zelle (41) auszufüllen.

5. Kühlgerät (1) gemäß Anspruch 1, **dadurch gekennzeichnet, dass** die Platte (42) eine Mehrzahl an Öffnungen (44) aufweist, welche es der Kühlluft erlauben, in das Kühlfach (10) und/oder in das Gefrierfach (20) zu strömen.

6. Kühlgerät (1) gemäß Anspruch 1, **dadurch gekennzeichnet, dass** die thermogeformte Zelle (41) mindestens einen ersten Kanal (40A) und einen zweiten Kanal (40B) zum Sicherstellen einer adäquaten Kühlung des Innenfachs (10, 20), insbesondere des Gefrierfachs (20), aufweist.

7. Kühlgerät (1) gemäß Anspruch 1, **dadurch gekennzeichnet, dass** der Verdampfer (31) in der Kühlkammer (30) horizontal positioniert ist.

8. Verfahren zur Herstellung eines Kühlgeräts (1) des no-frost-Typs, insbesondere für den Hausgebrauch, umfassend:
- mindestens ein Innenfach (10, 20) zum Konservieren von Lebensmitteln, welches durch eine thermogeformte Zelle (41) definiert ist, wobei das Innenfach (10, 20) insbesondere ein Gefrierfach (20) aufweist;
- eine Kühlkammer (30), welche einen Verdampfer (31), der dazu eingerichtet ist, Luft zu kühlen, und ein Gebläse (32) zum Zirkulieren der Luft im Inneren des zumindest einen Innenfachs (10, 20) aufweist;
- ein Kanal (40) zum Verteilen der von dem Gebläse (32) kommenden Kühlluft in das Kühlgerät (1),
wobei das Verfahren einen Schritt des Thermoformens der thermogeformten Zelle (41) aufweist, in einer Weise, so dass letztere einen Vorsprung beinhaltet, der sich zu der Rückwand (2) des Kühlgeräts (1) erstreckt, um den Kanal (40) zu erhalten, wobei das Verfahren die folgenden Schritte umfasst:
a) Einfügen eines Isolierschaums (3) aus einem Kunststoffmaterial, insbesondere Polyurethan, in den Raum zwischen der Rückwand (2) und der thermogeformten Zelle (41);
b) Assoziieren einer Platte (42) mit der thermogeformten Zelle (41) zum Schließen des Kanals (40) durch Einfügen eines Paares von Fortsätzen (43) in den Kanal (40), wobei die Fortsätze (43) insbesondere beim Formen der Platte erhalten werden und dazu eingerichtet sind, als Referenzelemente zum korrekten Positionieren der Platte (42) relativ zu der thermogeformten Zelle (41) verwendet zu werden,
**dadurch gekennzeichnet, dass**
dem Schritt b) das Aufbringen von Dichtungselementen (45) an der Platte (42) vorausgeht, wobei die Dichtungselemente (45) in dem Kanal positioniert werden und zwischen der thermogeformten Zelle (41) und den Fortsätzen (43) der Platte (42) angeordnet werden, wobei die Dichtungselemente (45) dazu eingerichtet sind, jedwedes Austreten von Kühlluft zwischen der thermogeformten Zelle (41) und der Platte (42) zu verhindern.

9. Verfahren gemäß Anspruch 8, **dadurch gekennzeichnet, dass** dem Schritt b) das Aufbringen von Dichtungselementen (45) an der Platte (42) zum Positionieren der Dichtungselemente (45) außerhalb des Kanals (40) und um sie zwischen der thermogeformten Zelle (41) und der Platte anzuordnen, vorausgeht.

10. Verfahren gemäß Anspruch 8, **dadurch gekennzeichnet, dass** der Vorsprung drei zusammenhängende Abschnitte (41a, 41b) aufweist, wobei ein Paar von ersten Abschnitten (41a) im Wesentlichen senkrecht zu der Rückwand (2) ist und ein zweiter Abschnitt (41 b) im Wesentlichen parallel zu der Rückwand (2) ist, so dass der Kanal (40) einen im Wesentlichen rechteckigen Querschnitt aufweist.

## Revendications

1. Appareil de réfrigération (1) du type sans givre, en particulier pour un usage domestique, comprenant :
- au moins un compartiment interne (10, 20) pour conserver des aliments, défini par une cellule thermoformée (41), en particulier ledit compartiment interne (10, 20) comprenant un compartiment congélateur (20) ;
- une chambre de réfrigération (30) comprenant un évaporateur (31) adapté pour refroidir l'air et un ventilateur (32) pour faire circuler l'air à l'intérieur dudit au moins un compartiment interne (10, 20) ;
- une conduite (40) pour distribuer l'air de refroidissement provenant du ventilateur (32) dans ledit appareil de réfrigération (1),
ladite conduite (40) étant obtenue lors du thermoformage de ladite cellule thermoformée (41), en particulier en façonnant ladite cellule thermoformée (41) de façon à ce qu'elle comporte une saillie s'étendant vers une paroi arrière (2) de l'appareil de réfrigération (1) et ledit appareil de réfrigération (1) comprenant au moins une tôle (42) qui peut être associée à la cellule thermoformée (41) pour fermer la conduite (40), ladite tôle (42) comprenant une paire d'appendices sensiblement parallèles (43) s'étendant dans la conduite (40) dans la même direction que celle de l'écoulement d'air de refroidissement et servant d'élément de référence pour positionner correctement la tôle (42) par rapport à la cellule thermoformée (41),
**caractérisé en ce que**
il comprend des éléments d'étanchéité (45), réalisés en particulier en matériau spongieux, positionnés dans la conduite (40) et agencés entre la cellule thermoformée (41) et lesdits appendices (43) de la tôle (42) pour empêcher toute fuite d'air de refroidissement.

2. Appareil de réfrigération (1) selon la revendication 1, **caractérisé en ce que** ledit appareil de réfrigération (1) comprend des éléments d'étanchéité (45) positionnés à l'extérieur de la conduite (40) et agencés entre la cellule thermoformée (41) et la tôle (42).

3. Appareil de réfrigération (1) selon la revendication 1, **caractérisé en ce que** ladite saillie comporte trois portions contiguës (41a, 41b), une paire de premières portions (41a) étant sensiblement perpendiculaire à ladite paroi arrière (2) et une seconde portion (41b) étant sensiblement parallèle à ladite paroi arrière (2), de sorte que ladite conduite (40) ait une section transversale sensiblement rectangulaire.

4. Appareil de réfrigération (1) selon la revendication 1, **caractérisé en ce qu'**il comprend une mousse isolante (3) réalisée en matériau plastique, en particulier le polyuréthane, adaptée pour remplir l'espace intérieur entre la paroi arrière (2) et ladite cellule thermoformée (41).

5. Appareil de réfrigération (1) selon la revendication 1, **caractérisé en ce que** ladite tôle (42) comprend une pluralité d'ouvertures (44) permettant à l'air de refroidissement de s'écouler dans le compartiment réfrigérateur (10) et/ou dans le compartiment congélateur (20).

6. Appareil de réfrigération (1) selon la revendication 1, **caractérisé en ce que** ladite cellule thermoformée (41) comprend au moins une première conduite (40A) et une seconde conduite (40B) pour garantir un refroidissement adéquat du compartiment interne (10, 20), en particulier du compartiment congélateur (20).

7. Appareil de réfrigération (1) selon la revendication 1, **caractérisé en ce que** ledit évaporateur (31) est positionné à l'horizontale à l'intérieur de ladite chambre de réfrigération (30).

8. Procédé de fabrication d'un appareil de réfrigération (1) du type sans givre, en particulier pour une utilisation domestique, comprenant :
- au moins un compartiment interne (10, 20) pour conserver des aliments, défini par une cellule thermoformée (41), en particulier ledit compartiment interne (10, 20) comprenant un compartiment congélateur (20) ;
- une chambre de réfrigération (30) comprenant un évaporateur (31) adapté pour refroidir l'air et un ventilateur (32) pour faire circuler l'air à l'intérieur dudit au moins un compartiment interne (10, 20) ;
- une conduite (40) pour distribuer l'air de refroidissement provenant du ventilateur (32) dans ledit appareil de réfrigération (1),
ledit procédé comprenant une étape de thermoformage de ladite cellule thermoformée (41) de manière à ce que cette dernière comporte une saillie s'étendant vers une paroi arrière (2) de l'appareil de réfrigération (1) dans le but d'obtenir ladite conduite (40),
ledit procédé comprenant les étapes suivantes :
a) insertion d'une mousse isolante (3) réalisée en matériau plastique, en particulier le polyuréthane, dans l'espace entre ladite paroi arrière (2) et ladite cellule thermoformée (41) ;
b) association d'une tôle (42) à la cellule thermoformée (41) pour fermer la conduite (40), en insérant une paire d'appendices (43) dans ladite conduite (40), en particulier lesdits appendices (43) étant obtenus lors du moulage de ladite tôle et étant adaptés pour être utilisés en tant qu'éléments de référence pour positionner correctement la tôle (42) par rapport à la cellule thermoformée (41),
**caractérisé en ce que**
ladite étape b) est précédée par l'application d'éléments d'étanchéité (45) à la tôle (42), lesdits éléments d'étanchéité (45) étant positionnés dans la conduite (40) et agencés entre la cellule thermoformée (41) et lesdits appendices (43) de la tôle (42), lesdits éléments d'étanchéité (45) étant adaptés pour empêcher toute fuite d'air de refroidissement entre la cellule thermoformée (41) et la tôle (42).

9. Procédé selon la revendication 8, **caractérisé en ce que** ladite étape b) est précédée par l'application d'éléments d'étanchéité (45) à la tôle (42) pour positionner lesdits éléments d'étanchéité (45) à l'extérieur de la conduite (40) et les agencer entre la cellule thermoformée (41) et la tôle (42).

10. Procédé selon la revendication 8, **caractérisé en ce que** ladite saillie comporte trois portions contiguës (41a, 41b), une paire de premières portions (41a) étant sensiblement perpendiculaire à ladite paroi arrière (2) et une seconde portion (41b) étant sensiblement parallèle à ladite paroi arrière (2), de sorte que ladite conduite (40) ait une section transversale sensiblement rectangulaire.
